# EUROPÄISCHE PATENTSCHRIFT

(11) **EP 1 797 105 B1**
(45) Veröffentlichungstag und Bekanntmachung des Hinweises auf die Patenterteilung: **16.11.2011**
(21) Anmeldenummer: 05787296.2
(22) Anmeldetag: 14.09.2005
(51) Int. Cl.: C07F 9/6561, C08K 5/5399

(54) **PHOSPHOR-HALTIGE HEPTAZINDERIVATE, VERFAHREN ZU DEREN HERSTELLUNG UND DEREN VERWENDUNG ALS FLAMMSCHUTZMITTEL**
HEPTAZINE DERIVATIVES CONTAINING PHOSPHORUS, METHOD FOR THE PRODUCTION THEREOF AND USE THEREOF AS FLAME RETARDANTS
DÉRIVÉS D'HEPTAZINE PHOSPHORÉS, LEUR PROCÉDÉ DE PRODUCTION, ET LEUR UTILISATION EN TANT QU'IGNIFUGEANTS

(30) Priorität: 29.09.2004 DE 102004047257
(43) Veröffentlichungstag der Anmeldung: 20.06.2007
(73) Patentinhaber: Zylum Beteiligungsgesellschaft mbH & Co. Patente II KG, 12529 Schönefeld / Waltersdorf (DE)
(72) Erfinder: GMEINER, Tobias, 78465 Konstanz (DE); KROKE, Edwin, 78467 Konstanz (DE); SCHWARZ, Marcus, 78462 Konstanz (DE)
(74) Vertreter: Zech, Stefan Markus
(86) Internationale Anmeldenummer: PCT/EP2005/009903
(87) Internationale Veröffentlichungsnummer: WO 2006/034784

(56) Entgegenhaltungen:
- EP-A- 0 994 156
- WO-A-00/66661
- WO-A-98/24838
- US-A- 4 879 327

## Beschreibung

Die vorliegende Erfindung betrifft unsymmetrische und symmetrische Phosphor-haltige Heptazinderivate, dargestellt durch die Formel (1): 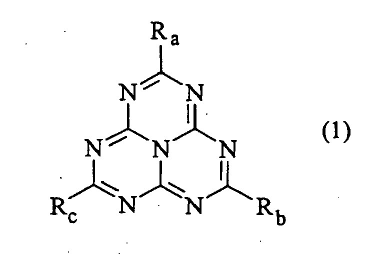 wobei Rₐ, R_{b} und R_{c} unabhängig voneinander eine Azidgruppe -N₃ oder eine -N=PR₁R₂R₃ Gruppe bedeuten, mit der Maßgabe, daß mindestens ein Rest von Rₐ, R_{b} und R_{c} eine -N=PR₁R₂R₃ Gruppe ist, ein Verfahren zu deren Herstellung sowie deren Verwendung.

Es ist bekannt, dass zahlreiche C/N/H-Verbindungen, speziell s-Triazinderivate (insbesondere Melamin und seine Derivate), flammhemmende Eigenschaften besitzen. Sie werden dementsprechend in unterschiedlichen Bereichen als Flammschutzmittel eingesetzt. Typische Anwendungen liegen in der Elektronik-, Kunststoff-, Holz- und Textilindustrie, indem brennbare Werkstoffe durch vorstehende Verbindungen als flammhemmende Zusätze stabilisiert werden. So offenbaren WO9824838 und WO0066661 Iminophaphorane als Flammschuitzmittel für organische Materialen.

Des weiteren eignen sich auch entsprechende Heptazin- bzw. Tri-s-triazinderivate wie Melem (C₆H₆N₁₀) und Melon (C₆H₃N₉) als beispielsweise Kunststoffzusätze in Feuerschutzanwendungen (EPO994156 und US 4879327).

Als flammhemmende Zusätze werden heute vielfach jedoch noch halogenhaltige Substanzen eingesetzt. Diese sind gesundheitsschädlich und belasten die Umwelt. Daher wird schon seit längerem versucht, sie durch halogenfreie Flammhemmstoffe zu ersetzen. Besonders vielversprechend und stellenweise auch im Einsatz sind Phosphorverbindungen.

Kürzlich wurde auch darüber berichtet, dass Phosphor und Stickstoff - sofern sie gemeinsam in einer Polymerformulierung vorkommen - sich synergetisch bezüglich der Feuerbeständigkeit ergänzen.

Es ist daher Aufgabe der vorliegenden Erfindung, neue Verbindungen bereitzustellen, welche reich an Stickstoff und Phosphor sowie vorzugsweise halogenfrei sein sollen und sich unter anderem auch als Flammschutzmittel eignen sollen.

Diese Aufgabe wird durch die in den Ansprüchen gekennzeichneten Ausführungsformen gelöst.

Insbesondere werden unsymmetrische und symmetrische Phosphor-haltige Heptazinderivate, dargestellt durch die Formel (1): 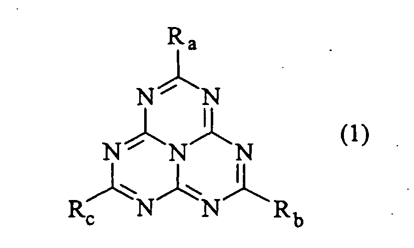 bereitgestellt, wobei Rₐ, R_{b} und R_{c} unabhängig voneinander eine Azidgruppe -N₃ oder eine -N=PR₁R₂R₃ Gruppe bedeuten, mit der Maßgabe, daß mindestens ein Rest von Rₐ, R_{b} und R_{c} eine -N=PR₁R₂R₃ Gruppe ist, wobei R₁, R₂ und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können,
und davon abgeleitete Oligomere und Polymere.

In einer bevorzugten Ausführungsform der vorliegenden Erfindung werden symmetrische Phosphor-haltige Heptazinderivate, dargestellt durch die Formel (2), bereitgestellt: 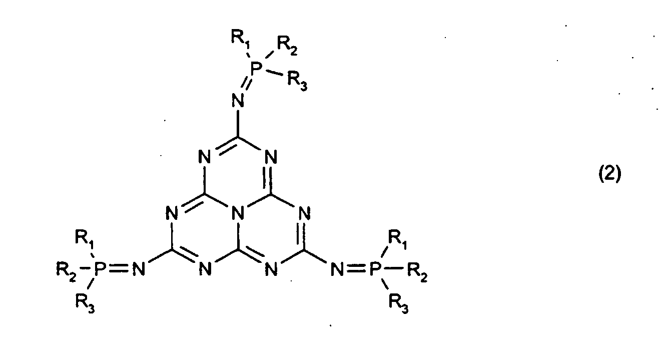 worin R₁, R₂ und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können,
und davon abgeleitete Oligomere und Polymere.

Vorzugsweise umfasst die Gruppe β die vorstehenden Substituenten ausschließlich den Halogenen, d.h. keine Halogensubstituenten.

Die erfindungsgemäßen Phosphor-haltigen Heptazinderivate sind üblicherweise luftstabil und farblos.

In einer besonderes bevorzugten Ausführungsform der vorliegenden Erfindung stellen R₁, R₂ und R₃ des Phosphor-haltigen Heptazinderivats gemäß den vorstehenden Formeln (1) bzw. (2) jeweils einen geradkettigen oder verzweigtkettigen (C₁-C₁₂)-Alkylrest dar, wobei Methyl oder n-Butyl für R₁ R₂ und R₃ besonders bevorzugt sind.

In einer anderen besonders bevorzugten Ausführungsform der vorliegenden Erfindung stellen R₁, R₂ und R₃ des Phosphor-haltigen Heptazinderivats gemäß den vorstehenden Formeln (1) bzw. (2) jeweils Phenyl oder jeweils m-Kresyl dar.

Im Vergleich zu den herkömmlichen Flammschutzmitteln des Standes der Technik können die erfindungsgemäßen Phosphor-haltigen Heptazinderivate, die auch als Melemphosphoranylide bezeichnet werden können, durch entsprechende Auswahl der Reste hinsichtlich der physikalischen und chemischen Eigenschaften der resultierenden Verbindungen dieser Stoffklasse vorteilhaft variiert werden und so in einfacher Art und Weise gezielt für eine bestimmte Anwendung "maßgeschneidert" werden.

Im Hinblick auf eine Verwendung der erfindungsgemäßen Phosphor-haltigen Heptazinderivate als Flammschutzmittel können so beispielsweise vorteilhaft eine erhöhte Löslichkeit des Derivats in einem zu schützenden Kunststoff sowie eine bessere Anpassung an die Anwendungserfordernisse erzielt werden. Die Stoffklasse der erfindungsgemäßen Phosphor-haltigen Heptazinderivate bietet schon allein aufgrund ihrer chemischen Struktur eine bessere Löslichkeit in Kunststoffen als Melon und Melem, die als Feststoffe eingesetzt und für eine Anwendung als Flammschutzmittel extra zerkleinert werden müssen.

Des weiteren bieten die erfindungsgemäßen Phosphor-haltigen Heptazinderivate den Vorteil, dass sie im Hinblick auf eine Flammschutzverwendung hinsichtlich der Reste R₁, R₂ und R₃ halogenfrei gestaltet werden können und somit im Vergleich zu den halogenhaltigen Flammschutzmitteln des Standes der Technik umweltfreundlich sind.

Gemäß einer weiteren Ausführungsform der vorliegenden Erfindung können die Phosphor-haltigen Heptazinderivate auch als Oligomer oder Polymer vorliegen, wobei bei letzteren Baueinheiten vorliegen, die zwei oder mehr verbrükkende Phosphingruppen bzw. Phosphazenverbrückungen tragen, so daß zwei oder mehr Heptazineinheiten miteinander verknüpft werden, wie in nachfolgender Formel (3) gezeigt:

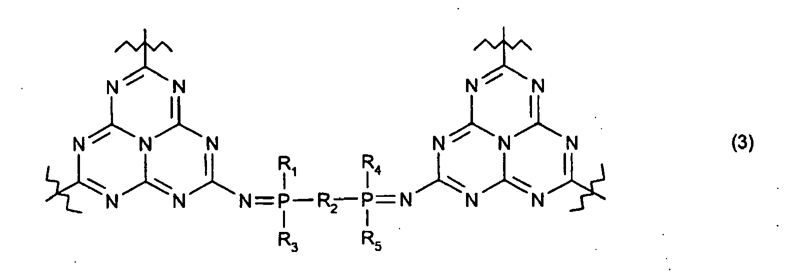

Ein weiterer Gegenstand der vorliegenden Erfindung betrifft ein Verfahren zur Herstellung der vorstehend definierten unsymmetrischen bzw. symmetrischen Phosphor-haltigen Heptazinderivate gemäß der Formel (1), welches den Schritt des Umsetzens von Triazido-tri-s-triazin (C₆N₁₆) mit mindestens einem Äquivalent eines Phosphins PR₁R₂R₃ in einer Staudinger-Reaktion umfaßt, worin R₁, R₂ und R₃ wie vorstehend definiert sind. Symmetrische Phosphor-haltige Heptazinderivate gemäß der Formel (2) können dementsprechend durch die Umsetzung von Triazido-tri-s-triazin (C₆N₁₆) mit mindestens drei Äquivalenten eines Phosphins PR₁R₂R₃ in einer Staudinger-Reaktion hergestellt werden. Selbstverständlich kann im Rahmen der vorliegenden Erfindung die Umsetzung auch mit einem entsprechenden Phosphin-Gemisch durchgeführt werden.

Es wurde festgestellt, dass sich gemäß der vorliegenden Erfindung Phosphor-haltige Heptazinderivate der Formel (1) bzw. (2) in einfacher Art und Weise über eine Staudinger-Reaktion aus Triazido-tri-s-triazin (C₆N₁₆) synthetisieren lassen. Die Produkte fallen in hohen Ausbeuten an und lassen sich gut reinigen.

Das in dem erfindungsgemäßen Verfahren zu verwendende Lösungsmittel unterliegt keiner spezifischen Beschränkung. Üblicherweise werden hierfür polar aprotische Lösungsmittel bzw. Lösungsmittelgemische eingesetzt. Vorzugsweise ist das Lösungsmittel aus der Gruppe, bestehend aus Dimethylsulfoxid (DMSO), Dimethylformamid, (DMF), Tetrahydrofuran (THF), Dioxan, Acetonitril und Pyridin, ausgewählt. Besonders bevorzugt wird im erfindungsgemäßen Verfahren DMSO als Lösungsmittel verwendet.

Im erfindungsgemäßen Verfahren kann der bei einer Polykondensation durch Reaktion von Triazido-tri-s-triazin mit einer Verbindung, die zwei oder mehr Phosphingruppen trägt, freiwerdende gasförmige Stickstoff zugleich vorteilhaft als Treibmittel wirken, so dass auf diese Weise auch polymere Schäume herstellbar sind.

Alternativ können die erfindungsgemäßen Verbindung auch in einem zweistufigen Verfahren durch Umsetzung von Melem mit Phosphorpentachlorid in Phosphoroxytrichlorid unter Erhalten von C₆N₇(N=PCl₃)₃ als vielseitig verwendbarer Zwischenstufe und anschließender Umsetzung dieser Zwischenstufe mit Verbindungen des Typs X-OH, wobei dann X für einen vorstehend definierten Alkyl-, Aryl oder Heterocyclenrest steht, unter nucleophiler Substitution von einem oder mehreren Chloratomen oder durch Umsetzung der -N=PCl₃ Gruppe mit entsprechenden metallorganischen Verbindungen wie z.B. Grignardreagenzien wie X-MgHal und Li-X erhalten werden.

Ein weiterer Gegenstand der vorliegenden Erfindung betrifft die Verwendung der vorstehend definierten Phosphor-haltigen Heptazinderivate gemäß der Formel (1) bzw. (2) als Flammschutzmittel, insbesondere für Kunststoffe, Textilien, Holzprodukte, Papier, Kartonagen, Verputze, Dämmstoffe und Baustoffverbünde.

Darüber hinaus können die Phosphor-haltigen Heptazinderivate gemäß der vorliegenden Erfindung aber auch zur Herstellung von Werkstoffen verwendet werden, bei denen optische, akustische, magnetische oder (opto)elektronische Eigenschaften der erfindungsgemäßen Derivate genutzt werden. In einem solchen Fall kann es dann auch möglich sein, dass das erfindungsgemäße Phosphor-haltige Heptazinderivat Halogenatome enthält.

Ferner können die Phosphor-haltigen Heptazinderivate gemäß der vorliegenden Erfindung auch zur Herstellung polymerer Schäume eingesetzt werden, wie bereits angeführt.

Die vorliegende Erfindung wird durch die nachstehenden, nicht-beschränkenden Beispiele weiter erläutert.

### Beispiele

Alle Reaktionen wurden unter Schutzgas mit Schlenk- und Glovebox-Technik durchgeführt. Es wurden im Handel erhältliche (Aldrich) Ausgangsstoffe verwendet. Triazido-tri-s-triazin (C₆N₁₆) wurde entsprechend einer Literaturvorschrift synthetisiert.

Die allgemeine Reaktion der nachstehenden Beispiele 1 bis 4 läuft wie folgt ab:

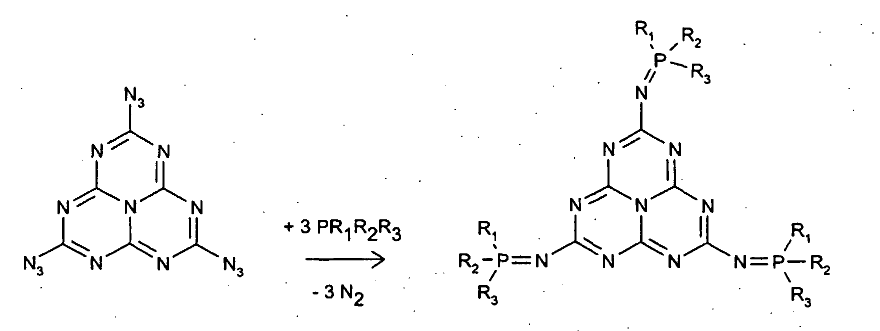

### Beispiel 1

### R₁ = R₂ = R₃ = Ph

In einem Schlenkgefäß (50 ml) mit Magnetrührstab wurden 65 mg (0,22 mmol) reines Triazid in trockenem DMSO gelöst. Zu der Lösung wurden insgesamt 190 mg (0,72 mmol) pulverisiertes und zuvor über P₄O₁₀ getrocknetes P(Ph)₃ in kleinen Portionen unter Rühren zugegeben. Das P(Ph)₃ ging dabei vollständig in Lösung, wobei eine leichte Gasentwicklung sowie eine intensivere Gelbfärbung des Reaktionsansatzes zu beobachten war. Nach ca. 30 min trat eine Trübung des Reaktionsansatzes ein. Nach 1 h weiterem Rühren bei Raumtemperatur wurde ein weißer Niederschlag erhalten. Die Suspension wurde zentrifugiert und die überstehende Lösung abdekantiert. Der zurückbleibende Feststoff wurde bei 80°C im Vakuum getrocknet, die Abwesenheit von Lösungsmittel wurde mittels IR-Spektren überprüft. Weißer Feststoff, Ausbeute: 145 mg (66% bezogen auf das eingesetzte C₆N₁₆). FT-IR (KBr, cm⁻¹): 1620 (vs), 1393 (vs), 1273 (s), 1182 (m), 1109 (s), 1037 (m), 926 (m), 720 (m), 533 (m). MS (MALDI, m/z) 999,7 (M + H⁺), 739,5 (M⁺ - PPh₃ + 3H) Beobachtungen beim Erwärmen: 210-215°C Gelbfärbung, ab 230°C braunes Produkt, dessen IR-Spektrum mit dem synthetisierten Heptazinderivat identisch ist.

### Beispiel 2

R₁ = R₂ = R₃ = Me

In einem Einhals-Schlenkkolben (50 ml) mit Magnetrührstab wurden 0,5 ml P(Me)₃ vorgelegt. Hierzu wurde bei Raumtemperatur eine Lösung von 440 mg (1,5 mmol) C₆N₁₆ in 10 ml trockenem DMSO langsam zugetropft. Dabei trat eine starke Gasentwicklung und Erwärmung des Reaktionsansatzes auf. Dieser wurde daraufhin in einem Wasserbad bis knapp an den Gefrierpunkt von DMSO gekühlt. Nach Zutropfen von ca. der Hälfte der C₆N₁₆-Lösung trat keine Entfärbung derselben mehr ein. Nach Zugabe der gesamten Menge C₆N₁₆ wurde die Lösung im Vakuum eingeengt und bei 80-90°C von flüchtigen Bestandteilen befreit.

### Beispiel 3

### R₁ = R₂ = R₃ = n-Butyl

In einem Schlenkgefäß (50 ml) mit Magnetrührstab wurden 0,85 ml (3,4 mmol) Tri(n-butyl)phosphin vorgelegt. Hierzu wurde bei Raumtemperatur eine Lösung von 300 mg (1 mmol) C₆N₁₆ in ca. 10 ml trockenem DMSO langsam zugetropft. Dabei färbte sich die Lösung unter leichter Gasentwicklung orangegelb und wurde nach weiterem Rühren hellgelb. Der Ansatz wurde über Nacht gerührt. Hierbei trat eine Phasentrennung in eine weißliche Suspension über einer gelblichen Lösung auf. Durch Filtration über eine Schutzgasfritte wurde ein weißer Feststoff erhalten. Dieser wurde mit wenig DMSO ausgewaschen und anschließend unter Vakuum getrocknet. Die zurückbleibende Substanz (533 mg, 65% bezogen auf C₆N₁₆) wurde in THF umkristallisiert. Es ergaben sich farblose, klare Kristalle, die ohne umgebendes Lösungsmittel schnell trüb wurden. MS (MALDI, m/z) 619,6 (M⁺ - P(n-Bu)₃ + 3H); 419,2 (M⁺ - 2 P(n-Bu)₃ + 5H).

### Beispiel 4

### R₁ = R₂ R₃ = m-Kresyl

In einem Schlenkgefäß (50 ml) mit Magnetrührstab wurden 1,25 ml Tri(m-Kresyl)phosphin vorgelegt. Hierzu wurde bei Raumtemperatur eine Lösung von 300 mg (1 mmol) C₆N₁₆ in ca. 10 ml trockenem DMSO langsam zugetropft. Dabei wurde eine leichte Erwärmung sowie eine schwache Gasentwicklung beobachtet. Der Reaktionsansatz wurde über Nacht gerührt und dann das Lösungsmittel unter Vakuum abkondensiert. Das zurückbleibende gelbbraune Öl wurde in THF gelöst und zum Sieden erhitzt. Dabei wurde ein beigefarbener Niederschlag erhalten, der abfiltriert und an Luft getrocknet wurde, was eine Ausbeute von 142 mg ergab.

Beobachtungen beim Erwärmen ("Schmelzpunktbestimmung"): ab 178°C dunkelbraune Verfärbung, weiter keine Veränderung bis 340°C. Mittels IR-Spektroskopie konnte nachgewiesen werden, dass für die Verfärbung Spuren der Ausgangsverbindung Triazid verantwortlich sind. Das Eintreten keiner weiteren Veränderung bis 380°C ist ein Beleg für die hohe thermische Stabilität des erhaltenen Phosphor-haltigen Heptazinderivats.

### Beispiel 5 (nicht erfindungsgemäß)

### Herstellung der Zwischenstufe C₆N₇(N=PCl₃)₃

Mit heißem dest. Wasser gewaschenes und am Vakuum getrocknetes Melem (1,00 g, 4,58 mmol) wird unter Schutzgas mit PCl₅ in POCl₃ suspendiert. Diese gelbbraune Suspension wird für 20 h unter Rühren zum Rückfluß erhitzt., wobei sich ein weißer, voluminöser Feststoff bildet. Durch Abzentrifugation und mehrmaliges Waschen mit trockenem Pentan wird das Produkt von überschüssigem PCl₅ und POCl₃ befreit. Elementaranalyse und Massenspektren belegen die Bildung von C₆N₇(N=PCl₃)₃.

## Patentansprüche

1. Unsymmetrische und symmetrische Phosphor-haltige Heptazinderivate, dargestellt durch die Formel (1): 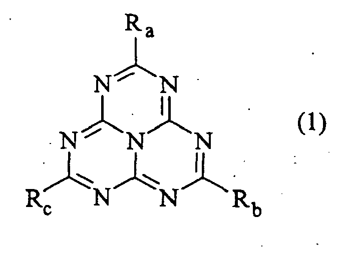 wobei Rₐ, R_{b} und R_{c} unabhängig voneinander eine Azidgruppe -N₃ oder eine -N=PR₁R₂R₃ Gruppe bedeuten, mit der Maßgabe, daß mindestens ein Rest von Rₐ, R_{b} und R_{c} eine -N=PR₁R₂R₃ Gruppe ist,
wobei R₁, R₂ und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest,
einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan,
Benzyl, 4-Methoxybenzyl, 4-Nitrobenzyl, Phenyl, und 4-Methoxyphenyl, substituiert sein können,
und davon abgeleitete Oligomere und Polymere,
wobei bei letzteren Baueinheiten vorliegen die zwei oder mehr verbrükkende Phosphingruppen bzw. Phosphazenverbrückungen tragen, so daß zwei oder mehr Heptazineinheiten miteinander verknüpft werden, wie in nachfolgender Formel (3) gezeigt:

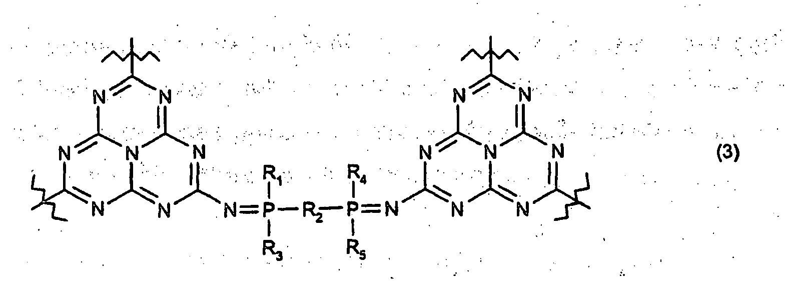

2. Phosphor-haltiges Heptazinderivat gemäß Anspruch 1, dargestellt durch die Formel (2): 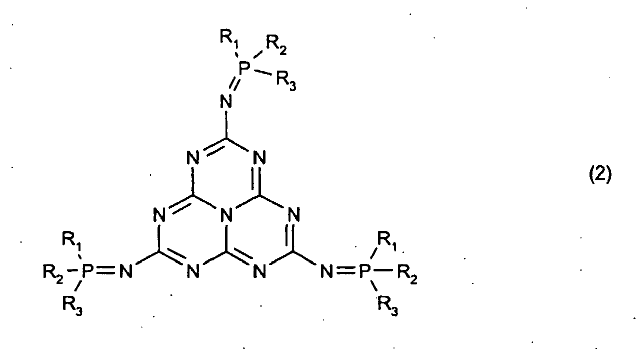 worin R₁, R₂ und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino; Di(C₁-C₆)alkylamino, Nitro, Cyan, Benzyl, 4-Methoxybenzyl, 4-Nitrobenzyl, Phenyl, und 4-Methoxyphenyl, substituiert sein können,
und davon abgeleitete Oligomere und Polymere.

3. Phosphor-haltiges Heptazinderivat nach Anspruch 1 oder 2, wobei R₁, R₂ und R₃ jeweils einen geradkettigen oder verzweigtkettigen (C₁-C₁₂)-Alkylrest darstellen.

4. Phosphor-haltiges Heptazinderivat nach Anspruch 1 oder 2, wobei R₁, R₂ und R₃ jeweils Methyl oder jeweils n-Butyl darstellen.

5. Phosphor-haltiges Heptazinderivat nach Anspruch 1 oder 2, wobei R₁, R₂ und R₃ jeweils Phenyl oder jeweils m-Kresyl darstellen.

6. Verfahren zur Herstellung eines Phosphor-haltigen Heptazinderivats gemäß der Formel (1) nach einem der vorhergehenden Ansprüche 1 bis 5, welches den Schritt des Umsetzens von Triazido-tri-s-triazin (C₆N₁₆) mit mindestens einem Äquivalent eines Phosphins PR₁R₂R₃ in einer Staudinger-Reaktion umfaßt, worin R₁, R₂ und R₃ wie vorstehend definiert sind.

7. Verfahren zur Herstellung eines Phosphor-haltigen Heptazinderivats gemäß der Formel (2) nach einem der vorhergehenden Ansprüche 2 bis 5, welches den Schritt des Umsetzens von Triazido-tri-s-triazin (C₆N₁₆) mit mindestens drei Äquivalenten eines Phosphins PR₁R₂R₃ in einer Staudinger-Reaktion umfaßt, worin R₁, R₂ und R₃ wie vorstehend definiert sind.

8. Verfahren zur Herstellung eines Phosphor-haltigen Heptazinderivats gemäß der Formel (1) oder (2) nach einem der vorhergehenden Ansprüche 1 bis 5, welches das Umsetzen von Melem mit Phosphorpentachlorid in Phosphoroxytrichlorid unter Erhalten von C₆N₇(N=PCl₃)₃ als Zwischenstufe und anschließend das Umsetzen dieser Zwischenstufe mit Verbindungen des Typs X-OH, wobei dann X für einen vorstehend definierten Alkyl-, Aryl oder Heterocyclenrest steht, unter nucleophiler Substitution von einem oder mehreren Chloratomen oder das Umsetzen mit entsprechenden metallorganischen Verbindungen umfasst.

9. Verwendung eines Phosphor-haltigen Heptazinderivats gemäß den Formel (1) oder (2) nach einem der vorhergehenden Ansprüche 1 bis 5 als Flammschutzmittel, insbesondere für Kunststoffe, Textilien, Holzprodukte, Papier, Kartonagen, Verputze, Dämmstoffe und Baustoffverbünde, oder zur Herstellung polymerer Schäume.

## Claims

1. Asymmetric and symmetric phosphorus-containing heptazine derivatives represented by formula (1): 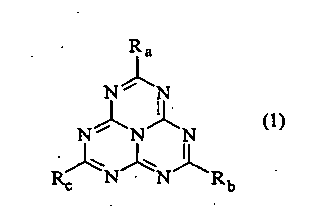 wherein Rₐ, R_{b} and R_{c} independently of one another stand for an -N₃ acid group or a -N=PR₁R₂R₃ group, with the proviso that at least one residue of Rₐ, R_{b} and R_{c} is a -N=PR₁R₂R₃ group,
wherein R₁, R₂, and R₃ independently of one another constitute a residue selected from the group α consisting of a straight-chain or branched-chain (C₁-C₁₂) alkyl residue, a (C₃-C₇) cycloalkyl residue, a straight-chain or branched-chain (C₁-C₁₂) alkenyl residue, a straight-chain or branched-chain (C₁-C₁₂) alkoxy residue, furyl, furanyl, benzofuranyl, thienyl, thiazolyl, benzothiazolyl, thiadiazolyl, imidazolyl, pyrazolyl, triazolyl, tetrazolyl, pyrazinyl, benzothienyl, morpholinyl, thiomorpholinyl, piperidinyl, piperazinyl, pyrrolidinyl, pyrimidinyl, imidazolinyl, pyrazolidinyl, phenyl, phenoxy, benzyl, benzyloxy, naphthyl, naphthoxy, di(C₁-C₆)alkylamino, tri(C₁-C₆)alkylsilyl or pyridyl, each of which can be substituted with one to five substituents selected independently of one another from the group β consisting of a straight-chain or branched-chain (C₁-C₆) alkyl residue, a (C₃-C₇) cycloalkyl residue, a straight-chain or branched-chain (C₁-C₆) alkenyl residue, a straight-chain or branched-chain (C₁-C₆) alkoxy residue, halogen, hydroxy, amino, di(C₁-C₆)alkylamino, nitro, cyan, benzyl, 4-metzhoxybenzyl, 4-nitrobenzyl, phenyl, and 4-methoxyphenyl,
and oligomers and polymers derived therefrom, wherein structural units are present in the latter which carry two or more bridging phosphine groups, respectively phosphazene bridgings so that two or more heptazine units are linked together as shown in the following formula (3)

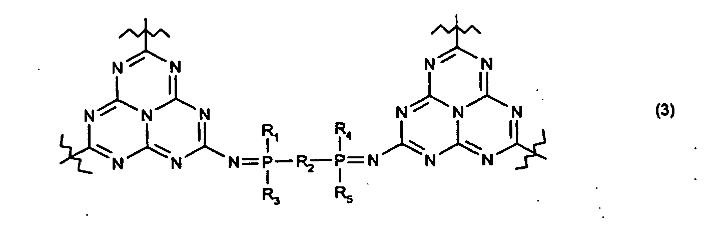

2. A phosphorus-containing heptazine derivative according to claim 1, represented by formula (2): 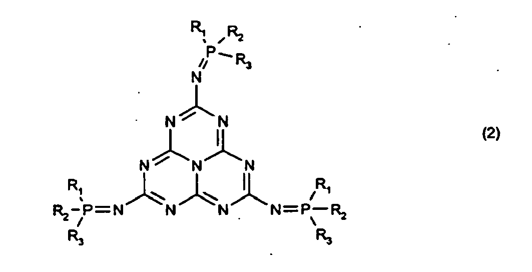 wherein R₁, R₂, and R₃ independently of one another constitute a residue selected from the group α consisting of a straight-chain or branched-chain (C₁-C₁₂) alkyl residue, a (C₃-C₇) cycloalkyl residue, a straight-chain or branched-chain (C₁-C₁₂) alkenyl residue, a straight-chain or branched-chain (C₁-C₁₂) alkoxy residue, furyl, furanyl, benzofuranyl, thienyl, thiazolyl, benzothiazolyl, thiadiazolyl, imidazolyl, pyrazolyl, triazolyl, tetrazolyl, pyrazinyl, benzothienyl, morpholinyl, thiomorpholinyl, piperidinyl, piperazinyl, pyrrolidinyl, pyrimidinyl, imidazolinyl, pyrazolidinyl, phenyl, phenoxy, benzyl, benzyloxy, naphthyl, naphthoxy, di(C₁-C₆)alkylamino, tri(C₁-C₆)alkylsilyl or pyridyl, each of which can be substituted with one to five substituents selected independently of one another from the group β consisting of a straight-chain or branched-chain (C₁-C₆) alkyl residue, a (C₃-C₇) cycloalkyl residue, a straight-chain or branched-chain (C₁-C₆) alkenyl residue, a straight-chain or branched-chain (C₁-C₆) alkoxy residue, halogen, hydroxy, amino, di(C₁-C₆)alkylamino, nitro, cyan, benzyl, 4-methoxybenzyl, 4-nitrobenzyl, phenyl, and 4-methoxyphenyl,
and oligomers and polymers derived therefrom.

3. The phosphorus-containing derivative according to claim 1 or 2, wherein R₁, R₂, and R₃ each constitute a straight-chain or branched-chain (C₁-C₁₂) alkyl residue.

4. The phosphorus-containing heptazine derivative according to claim 1 or 2, wherein R₁, R₂, and R₃ each constitute methyl or n-butyl.

5. The phosphorus-containing heptazine derivative according to claim 1 or 2, wherein R₁, R₂, and R₃ each constitute phenyl or m-cresyl.

6. A method for preparing a phosphorus-containing heptazine derivative as per formula (1) according to any one of the preceding claims 1 to 5, comprising the step of reacting triazido-tri-s-triazine (C₆N₁₆) with at least one equivalent of a PR₁R₂R₃ phosphine in a Staudinger reaction, wherein R₁, R₂, and R₃ are as defined above.

7. A method for preparing a phosphorus-containing heptazine derivative as per formula (2) according to any one of the preceding claims 2 to 5, comprising the step of reacting triazido-tri-s-triazine (C₆N₁₆) with at least three equivalent of a PR₁R₂R₃ phosphine in a Staudinger reaction, wherein R₁, R₂, and R₃ are as defined above.

8. The method for preparing a phosphorus-containing heptazine derivative as per formula (1) or (2) according to any one of the preceding claims 1 to 5, comprising the reacting of melem with phosphorus pentachloride in phosphoroxytrichloride while obtaining C₆N₇(N=PCl₃)₃ as an intermediate and subsequently reacting said intermediate with compounds of the X-OH type, wherein X then stands for an alkyl, aryl or heterocyclic residue, in nucleophilic substitution of one or more chlorine atoms, or the reacting with corresponding organometallic compounds.

9. Use of a phosphorus-containing heptazine derivative as per formula (1) or (2) according to any one of the preceding claims 1 to 5, as a flame retardant, in particular for plastics, textiles, wooden products, paper, cardboards, plasters, insulating materials and building material composites, or for producing polymer foams.

## Revendications

1. Dérivés d'heptazine phosphorés asymétriques et symétriques, représentés par la formule (1) : 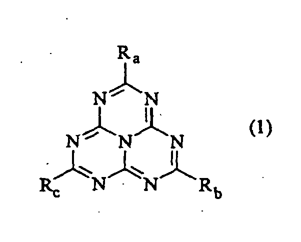 où Rₐ, R_{b} et R_{c} signifient indépendamment l'un de l'autre un groupe azido -N₃ ou un groupe -N=PR₁R₂R₃, à la condition qu'au moins un reste de Rₐ, R_{b} et R_{c} soit un groupe -N=PR₁R₂R₃,
où R₁, R₂ et R₃ représentent indépendamment l'un de l'autre un reste choisi dans le groupe α constitué d'un reste alkyle (C₁-C₁₂) à chaîne droite ou à chaîne ramifiée, un reste cycloalkyle (C₃-C₇), un reste alkényle (C₁-C₁₂) à chaîne droite ou à chaîne ramifiée, un reste alkoxy (C₁-C₁₂) à chaîne droite ou à chaîne ramifiée, furyle, furanyle, benzofuranyle, thiényle, thiazolyle, benzothiazolyle, thiadiazolyle, imidazolyle, pyrazolyle, triazolyle, tétrazolyle, pyrazinyle, benzothiényle, morpholinyle, thiomorpholinyle, pipéridinyle, pipérazinyle, pyrrolidinyle, pyrimidinyle, imidazolinyle, pyrazolidinyle, phényle, phénoxy, benzyle, benzyloxy, naphthyle, naphthoxy, di(C₁-C₆)alkylamino, tri(C₁-C₆)alkylsilyle ou pyridyle, pouvant être substitués par un à cinq substituants choisis indépendamment l'un de l'autre dans le groupe β constitué d'un reste alkyle (C₁-C₆) à chaîne droite ou à chaîne ramifiée, un reste cycloalkyle (C₃-C₇), un reste alkényle (C₁-C₆) à chaîne droite ou à chaîne ramifiée, un reste alkoxy (C₁-C₆) à chaîne droite ou à chaîne ramifiée, halogène, hydroxy, amino, di(C₁-C₆)alkylamino, nitro, cyan, benzyle, 4-méthoxybenzyle, 4-nitrobenzyle, phényle et 4-méthoxyphényle,
et les oligomères et polymères qui en sont dérivés,
où, pour ces derniers, sont présents des composants qui portent deux ou plus groupes de phosphine pontants ou ponts de phosphazène de sorte que deux ou plus unités d'heptazine soient reliées entre elles comme illustré dans la formule (3) ci-après :

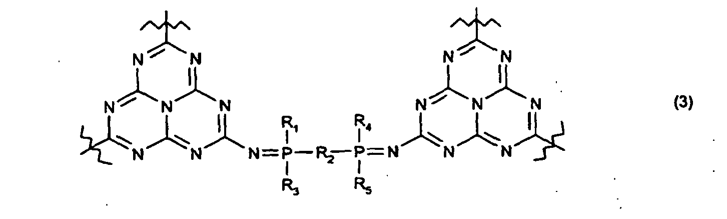

2. Dérivé d'heptazine phosphoré selon la revendication 1, représenté par la formule (2) : 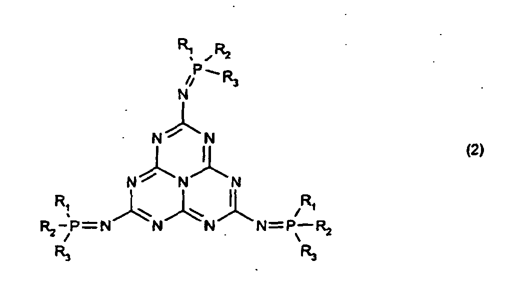 où R₁, R₂ et R₃ représentent indépendamment l'un de l'autre un reste choisi dans le groupe α constitué d'un reste alkyle (C₁-C₁₂) à chaîne droite ou à chaîne ramifiée, un reste cycloalkyle (C₃-C₇), un reste alkényle (C₁-C₁₂) à chaîne droite ou à chaîne ramifiée, un reste alkoxy (C₁-C₁₂) à chaîne droite ou à chaîne ramifiée, furyle, furanyle, benzofuranyle, thiényle, thiazolyle, benzothiazolyle, thiadiazolyle, imidazolyle, pyrazolyle, triazolyle, tétrazolyle, pyrazinyle, benzothiényle, morpholinyle, thiomorpholinyle, pipéridinyle, pipérazinyle, pyrrolidinyle, pyrimidinyle, imidazolinyle, pyrazolidinyle, phényle, phénoxy, benzyle, benzyloxy, naphthyle, naphthoxy, di(C₁-C₆)alkylamino, tri(C₁-C₆)alkylsilyle ou pyridyle, pouvant être substitués chacun par un à cinq substituants choisis indépendamment l'un de l'autre dans le groupe β constitué d'un reste alkyle (C₁-C₆) à chaîne droite ou à chaîne ramifiée, un reste cycloalkyle (C₃-C₇), un reste alkényle (C₁-C₆) à chaîne droite ou à chaîne ramifiée, un reste alkoxy (C₁-C₆) à chaîne droite ou à chaîne ramifiée, halogène, hydroxy, amino, di(C₁-C₆)alkylamino, nitro, cyan, benzyle, 4-méthoxybenzyle, 4-nitrobenzyle, phényle et 4-méthoxyphényle,
et les oligomères et polymères qui en sont dérivés.

3. Dérivé d'heptazine phosphoré selon la revendication 1 ou 2, où R₁, R₂ et R₃ représentent chacun un reste alkyle (C₁-C₁₂) à chaîne droite ou à chaîne ramifiée.

4. Dérivé d'heptazine phosphoré selon la revendication 1 ou 2, où R₁, R₂ et R₃ représentent chacun du méthyle ou chacun du n-butyle.

5. Dérivé d'heptazine phosphoré selon la revendication 1 ou 2, où R₁, R₂ et R₃ représentent chacun du phényle ou chacun du m-krésyle.

6. Procédé de fabrication d'un dérivé d'heptazine phosphoré suivant la formule (1) selon l'une des précédentes revendications 1 à 5, qui comporte l'étape de conversion de triazido-tri-s-triazine (C₆N₁₆) avec au moins un équivalent d'une phosphine PR₁R₂R₃ dans une réaction de Staudinger, où R₁, R₂ et R₃ sont définis comme ci-dessus.

7. Procédé de fabrication d'un dérivé d'heptazine phosphoré suivant la formule (2) selon l'une des précédentes revendications 2 à 5, qui comporte l'étape de conversion de triazido-tri-s-triazine (C₆N₁₆) avec au moins trois équivalents d'une phosphine PR₁R₂R₃ dans une réaction de Staudinger, où R₁, R₂ et R₃ sont définis comme ci-dessus.

8. Procédé de fabrication d'un dérivé d'heptazine phosphoré suivant la formule (1) ou (2) selon l'une des précédentes revendications 1 à 5, qui comporte l'étape de conversion de mélème avec du pentachlorure de phosphore en oxytrichlorure de phosphore en conservant du C₆N₇(N=PCl₃)₃ comme intermédiaire et ensuite la conversion de cet intermédiaire avec des liaisons de type X-OH, où X représente alors un reste alkyle, aryle ou hétérocyclène défini ci-dessus, avec substitution nucléophile d'un ou de plusieurs atomes de chlore ou la conversion avec des liaisons organo-métalliques correspondantes.

9. Utilisation d'un dérivé d'heptazine phosphoré suivant la formule (1) ou (2) selon l'une des précédentes revendications 1 à 5 comme agent ignifuge, en particulier pour les matières synthétiques, textiles, produits en bois, papier, cartonnages, enduits, matières isolantes et matériaux de construction composites, ou pour la fabrication de mousses polymères.
